# EUROPEAN PATENT APPLICATION

(11) **EP 4 554 298 A1**
(43) Date of publication of application: **14.05.2025**
(21) Application number: 23208712.2
(22) Date of filing: 09.11.2023
(51) Int. Cl.: H04W 72/02

(54) **COMMUNICATION DEVICE AND COMMUNICATION SYSTEM**

(71) Applicant: EarthStreamer GmbH, 6020 Innsburck (AT)
(72) Inventor: KAPFERER, Wolfgang, 6020 Innsbruck (AT)
(74) Representative: Grünecker Patent- und Rechtsanwälte PartG mbB

(57) **Abstract**

The present invention relates to a communication device, comprising a receiving unit configured to receive data, a channel identification unit configured to identify one or more available communication channels, including at least one of a geostationary orbit, GEO, satellite communication channel, a medium Earth orbit, MEO, satellite communication channel and a low Earth orbit, LEO, satellite communication channel, a measurement unit configured to measure, for each of the available communication channels, an available transmission bandwidth, a channel selection unit configured to select one channel among the available communication channels, based on the available transmission bandwidth, a compression unit configured to compress the data based on a property of the selected channel and the available transmission bandwidth of the selected channel, and a transmission unit configured to transmit the compressed data via the selected communication channel. The present invention further relates to a communication system comprising the communication device.

## Description

The present invention relates to a communication device and a communication system comprising said communication device.

In case of large-scale disastrous situations such as earthquakes or wildfires an efficient orchestration of field staff on site is an absolute prerequisite, which requires reliable communication with a management center and/or another information source. For instance, the staff typically requires real-time information on the situation on site including satellite images of the site or other communication information. However, in some situations, certain communication channels are not available or reliable, for instance, because antennas for mobile communication are damaged such that no communication along this channel is possible or only a reduced bandwidth is available due to network overloads.

In the maritime sector, for instance, similar to the civil security sector, reliable communication and information provision are required. A standard in the maritime sector is the Automated Identification System (AIS), which is a system used for maritime vessel identification and tracking. It is a global system that enables ships and maritime authorities to exchange information about vessel movements, positions and other relevant data. The primary purpose of the AIS is to enhance the safety and efficiency of maritime navigation. It allows ships to monitor and be aware of other vessels in their vicinity, helping to prevent collisions and improve situational awareness. The AIS operates through transponders installed on the vessels. These transponders continuously broadcast vessel information, including identification, position, course, speed and other relevant data. The information is transmitted using very high frequency (VHF) radio waves. AIS signals are received by other vessels within range, as well as by coastal base stations and satellite systems. For instance, maritime authorities use AIS data to monitor vessel traffic and enforce maritime regulations. It helps them track vessels in restricted areas, monitor ship movements in busy waterways, and support search and rescue operations.

Away from land-based AIS receivers, the AIS has to rely on satellite communication. Even with current satellite systems, a ship may sail several hours between observations. Moreover, in congested areas, the time between observations may increase due to interference. Another problem is that two vessels that are below each other's horizon may broadcast their signals in the same time slot making it impossible for the satellite to separate and decode signals from these two vessels.

Currently available satellite systems such as the VHF data exchange system (VDES) may partially overcome the mentioned shortcomings of AIS, but usually are proprietary systems with their own satellite fleet and thus provide no compatibility or fallback option to other systems. In other words, there is a variety of different satellite communication, SatCom, providers connected to the AIS that have different communication standards.

In view of the above, it is an object of the present invention to provide a communication device that provides more reliable communication based on different technologies such as, for instance, satellite communication (in the following abbreviated as SatCom), 4G/5G, LAN and WIFI, as well as lower bandwidth consumption. In this manner, information exchange may be improved, for instance, in order to facilitate the work of on-site staff or to safely manage maritime traffic.

This object is achieved by the communication device according to claim 1 and the system according to claim 13 comprising said communication device. Further aspects are given by the dependent claims.

In detail, the present invention provides a communication device comprising a receiving unit configured to receive data, a channel identification unit configured to identify one or more available communication channels, including at least one of a geostationary orbit (GEO) SatCom channel, a medium Earth orbit (MEO) SatCom channel and a low Earth orbit (LEO) SatCom channel, a measurement unit configured to measure, for each of the available communication channels, an available transmission bandwidth, a channel selection unit configured to select the channel among the available communication channels, based on the available transmission bandwidth, a compression unit configured to compress the data based on a property of the selected channel and/or the available transmission bandwidth of the selected channel, and a transmission unit configured to transmit the compressed data via the selected communication channel.

The receiving unit can be configured to receive images such as satellite images, videos or situational awareness information that is of relevance in a given field of application like disaster management, civil security, maritime vessel tracking or the like. This data can be received via an interface in the communication device specific for a certain transmission channel such as Wi-Fi or satellite communication or a cable-based communication channel such as LAN.

The communication device is configured to transmit the data or compressed data via any of the available transmission channels instead of being limited to one specific transmission channel. In case a given channel is not available or only provides a low or insufficient transmission bandwidth, the channel selection unit can select a different transmission channel that offers better transmission conditions. In this manner, the reliability and efficiency of data transmission is increased because the device can select from multiple available communication channels and, in particular, select the one channel that offers the best transmission conditions, like the highest transmission bandwidth.

The compression unit can be configured to perform a compression of the data to be transmitted based on a property or requirement of the channel selected by the channel selection unit. Certain transmission channels may have preferred data types and formats, which can be taken into account by the compression unit. For instance, based on the available transmission rate and the amount of data to be transferred, the compression unit may set the compression ratio such that the size of the compressed data can be transmitted in a given amount of time. Overall, the employed transmission bandwidth may be reduced by this compression step.

In this manner, the described invention achieves the objective of a more reliable communication device consuming less transmission bandwidth.

There are multiple conceivable criteria for the channel selection unit to choose the one channel from among the available communication channels. For instance, it can be the channel with highest available transmission bandwidth in order to achieve the highest possible data transmission within a given time. Other or additional criteria might be the maximally allowed size of transmitted data packages or the minimal cost incurred by certain communication channels based on the amount of transmitted data. In any case, the device can be configured to identify the optimal communication channel in terms of transmission bandwidth, optionally under consideration of boundary criteria.

One or more of the available communication channels may further include mobile communication, Wi-Fi or radio communication, and, in particular, wherein the device further comprises an interface for each of these available communication channels. These interfaces may especially be contained in the transmission unit.

The communication device can, in this way, be configured to use a variety of communication channels for data transmission. Moreover, the given channels may be commonplace communication technology and, under normal circumstances, available at most places of relevance. As such, the device may provide flexible communication and may be used in a large variety of places, where any of the mentioned communication channels is available.

The transmission unit can be configured to transmit the compressed data at a regular time interval, in particular, wherein the time interval is adapted to the selected communication channel such that the available transmission bandwidth is not exceeded. In other words, the transmission unit can be configured to transmit the data in message packages at a predetermined frequency taking into account the available transmission bandwidth.

This configuration of the transmission unit allows for an adaption of the data transmission rate at a given situation and its requirements. In this context, one can typically choose between a high transmission rate of information (e.g. images) with low resolution and a low transmission rate of information with high resolution. For instance, in AIS, a high transmission frequency enables a more accurate determination of a vessel's trajectory and better prediction of the vessel's arrival time in a port. Further, when a vessel is on open sea, a lower transmission frequency may be adequate than in congested areas near a port or a strait.

Once a communication channel has been selected by the channel selection unit, it may nonetheless become necessary to switch to a different channel. Hence, the device may be configured in such a way that under a predetermined condition, the channel identification unit identifies one or more available communication channels, the measurement unit measures, for each of the available communication channels, the available transmission bandwidth, and the channel selection unit selects a different communication channel among the one or more available communication channels if the different communication channel has a higher transmission bandwidth than the previously selected communication channel. The transmission unit may then be configured to transmit the compressed data via the selected different communication channel.

The predetermined condition can be a predetermined time interval after a previous communication channel identification process such that the communication device, or more precisely the channel identification unit, identifies the available communication channels in regular time intervals. Another alternative or additional option is that the predetermined condition arises when the transmission bandwidth of the selected channels drops below a predetermined threshold.

If the channel identification unit identifies a communication channel that is more suitable, for instance because it provides a higher transmission bandwidth, the channel selection unit can be configured to switch channels to select the more suitable channel. However, the channel selection unit may not be limited to choosing a different channel with a higher transmission bandwidth than the previously selected transmission channel. Instead, other or additional criteria like the maximally allowed size of transmitted data packages or the minimal cost incurred by certain communication channels based on the amount of transmitted data could be relevant in choosing a different communication channel.

Hence, in case an originally selected channel fails or gets otherwise compromised, the communication device can be configured to establish a connection through a different available channel. The communication may therefore be less likely to fail and thus more reliable.

The device may further comprise an encryption unit configured to encrypt the compressed data, such that the transmission unit transmits compressed encrypted data via the selected communication channel.

The data transmitted by the communication device can be confidential such that a high level of security is required. Hence, the encryption unit improves the security of data transmission while ensuring efficiency and reliability.

In addition, the device may comprise a service brokerage unit configured to provide access data to enable data transmission via the selected communication channel.

Certain communication channels may require access credentials or have other security measures implemented before said channel can be employed for data transmission. The service brokerage unit may provide the required information to access such a protected communication channel, for instance access credentials for a Wi-Fi network. Hence, reliability of data transmission may be improved because additional communication channels, which might otherwise be not accessible to the communication device, can be accessed and employed for data transmission.

The compression unit may comprise a video encoding unit configured to, using a video codec, compress the data based on a video coding format to form a video stream. In this context, the transmission unit may further be configured to transmit the video stream via the selected communication channel.

The use of a video stream to transmit data via the selected communication channel can reduce the required transmission bandwidth. Particularly, it allows for leveraging widely spread decoding technologies built in numerous devices such as smartphones, tablets, laptops or workstations. In other words, using video stream allows users to access the data with established commodity hardware and software. In this way, the data can also be used efficiently in regions with low transmission bandwidths.

The device may further comprise a Digital Video or Audio Broadcasting, D(V/A)B, transceiver configured to broadcast the data or the compressed data.

One advantage of a communication between a D(V/A)B transceiver and a corresponding D(V/A)B receiver may be that the data transmitted by the transceiver can be received by a large number of receivers in parallel without requiring any internet connection. The data may thus be distributed fast and efficiently by the communication device. For instance, the receivers could be news channels that report on an incident at a given site or the receivers could be various aid agencies that cooperate at the site.

A particular application field of the present invention can be the maritime sector. Therefore, the receiving unit can comprise an interface for receiving Automatic Identification System data, AIS data, for identification and tracking of a maritime vessel.

As explained above, the AIS is a communication standard in the maritime sector that enhances safety and navigation of vessels and that is mandatory for all vessels of 500 gross tonnage or more and for all passenger ships sailing in local waters. In order to be compatible with the AIS standard, the communication device requires an interface adapted to the AIS system. Hence, the maritime vessel benefits from the advantages provided by the communication device in terms of reduced bandwidth and improved reliability because the vessel communication is not limited to VHF radio signals, but may also include satellite, Wi-Fi or mobile communication.

The AIS data may include identification information, position information, speed information and/or direction information of the maritime vessel.

A key purpose of the AIS system is the tracking of vessels and the prevention of collisions from identifying potential collision risks and taking appropriate actions to avoid collisions such as altering course or speed. Hence, the organization and safety of maritime vessels can be improved choosing this AIS data content.

The transmission unit may be configured to transmit the AIS data to a SatCom service provider using any of Iridium, Inmarsat and Starlink maritime SatCom solutions.

The AIS standard is based on communication by VHF radio waves at a frequency of 161.975 MHz and 162.025 MHz. The range of AIS signals is limited to about 40 to 60 nautical miles such that VHF-based AIS is only available around coastal zones or in an area with a sufficiently high density of vessels. Satellite-based AIS, on the other hand, do not have this limited range and makes it possible to track seafaring vessels beyond coastal areas. Hence, employing satellite AIS communication with one of the above-mentioned service providers increases the range of the communication channel and thus increases safety and communication efficiency of maritime vessels even on open sea.

The present invention further provides a communication system, comprising a communication device described previously, and an access permission unit configured to enable bidirectional communication between the communication device and an authorized entity. Therein, the communication device and the access permission unit are connected through the selected communication channel.

The authorized entity can be any person or organization with legitimate interest in accessing the data transmitted from the communication device. Exemplary entities include a governmental agency, an aid agency, a shipping company owning the vessel using the device or another vessel in proximity of the vessel. These entities can authorize themselves to the access permission unit via login credentials or can be preset as authorized in the access permission unit. The device may transmit the data to the access permission unit where the authorized entity can access it, for instance, via stream, download, display on a screen or other suitable ways. Moreover, since the access is bidirectional, the authorized entity may also transmit data to the access permission unit, which in turn, transmits this data to the device via the communication channel. In this way, the authorized agency can transmit data, such as messages, images and videos, to the communication device. This may serve as a reliable communication method between the authorized entity and a receiver, for instance, a shipping company and a vessel crew accessing the data received by the communication device.

Given that only authorized entities have receiving access to the transmitted data from the communication device, the communication itself is secure. Moreover, the bidirectional access enables an efficient management of a receiver on the side of the communication device through a reliable communication channel.

An embodiment of the communication system comprises a communication device for the identification and tracking of a maritime vessel. In this case, the access permission unit may be configured to enable bidirectional communication between the communication device and an AIS system or a very high frequency (VHF) data exchange system transmitting information on vessels in the vicinity of the maritime vessel.

The data from the AIS system or the very high frequency (VHF) data exchange system and received by the communication device can be displayed on navigation systems or electronic chart displays, allowing operators to visualize the data. For this purpose, the communication system may comprise a display device connected to the communication device. This data typically contains positions and other relevant data of nearby vessels. Hence, by receiving and displaying this information, vessel operators can identify potential collision risks and take appropriate actions to avoid accidents.

The access permission unit may further be configured to provide unidirectional access to a service provider such that the service provider is permitted to transmit data to the communication device.

By means of the unidirectional access, the service provider may only send data to the communication device, but may not be able to receive data from the communication device such that the communication/data between the communication device and the authorized user remains secure and cannot be accessed by any party. Exemplary service providers include information engines providing information on icebergs or other security hazards on sea. Hence, the provision of unidirectional access for an (external) service provider may enrich the data transmitted by the communication system and can improve security and comfort.

In addition, the present invention provides a communication method, comprising: receiving data, identifying one or more available communication channels, measuring, for each of the available communication channels, an available transmission bandwidth, selecting a channel among the available communication channels, based on the available transmission bandwidth, compressing the data based on a property of the selected channel and the available transmission bandwidth of the selected channel, and transmitting the compressed data via the selected communication channel. The method can be carried out with the communication device described above.

Further features and advantages will now be described in combination with the enclosed figures.
- Figure 1: shows a schematic first embodiment of the communication device;
- Figure 2: shows a schematic second embodiment of the communication device;
- Figure 3A: shows a schematic embodiment of a communication system comprising the communication device; and
- Figure 3B: illustrates the communication channel depicted in Figure 3A in more detail.

In the following and in the figures, if not specified to the contrary, the same reference signs denote the same or corresponding elements in the described embodiments.

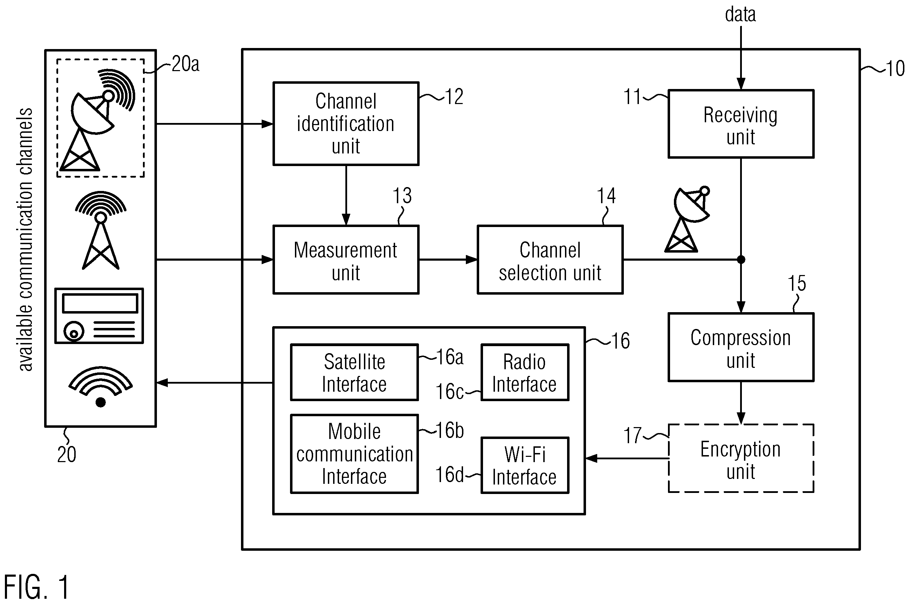

Figure 1 schematically shows a first embodiment of a communication device 10 according to the present invention. As mentioned at the outset, this communication device 10 can be particularly used in the civil security sector or the maritime sector to provide reliable and efficient data transfer, but is not limited to this type of application.

At first, the communication device 10 comprises a receiving unit 11 that is configured to receive data from a source, such as a computing device connected to the receiving unit 11. Typically, the data received contains image data, situational data and information reflecting the situation at a given site. For instance, the given site can be a place of natural disaster like an earthquake, where aid agencies need specific information like satellite images to estimate and organize the current situation on site. The data reception can be carried out by any communication means and the receiving unit 11 can contain a respective interface for receiving the data.

At most points on the Earth's surface, there are multiple communication channels available via which data can be transmitted. The most common channels, which the present description will refer to in the following, are satellite communication (including GEO, MEO and/or LEO satellite communication channels), mobile communication, radio waves, radar and Wi-Fi. The communication device 10 comprises a channel identification 11 unit that identifies, at a given position, one or more available communication channels 20. In the present example, the available communication channels 20 are satellite, mobile, radio and Wi-Fi. For this purpose, the channel identification unit 11 may be equipped with a transceiver for each of the before-mentioned communication channels. Those channels transmit a pilot signal that can be received by the respective transceiver. In case such a pilot signal is received, the channel identification unit 11 identifies the respective channel as being available. In addition or alternatively, the transceivers for one or all of the communication channels may transmit pilot data packages at a certain time interval in order to identify the available communication channels 20. Once a communication channel is selected, the transmission of the pilot data packages ceases and the actual situation data is transmitted along the selected communication channel 20a.

A measurement unit 13 measures, for each of the available communication channels 20, the respective available transmission bandwidth. The previously described sending and receiving of pilot data packages may be employed for this bandwidth measurement.

Once the available transmission bandwidth has been determined for each of the available transmission channels 20, the channel selection unit 14 selects, from among the available transmission channels 20, the channel 20a providing the highest transmission bandwidth. In this manner, it can be ensured that the most efficient data transmission is established. However, there can be other criteria for selecting the transmission channel 20a. For instance, certain countries' policies may incur cost when employing a certain communication channel such as mobile communication. In such a case, a different communication channel, even if it provides a lower transmission bandwidth, may be selected. Alternatively, there might be data types where certain transmission channels are preferable. Such channels may as well be selected over the channel with the highest transmission bandwidth. In the present example, the satellite channel is the selected communication channel 20a.

The data is consigned from the receiving unit 11 to the compression unit 15 configured to compress the data based on a property of the selected channel 20a and its available transmission bandwidth. To this end, the compression unit 15 may have stored therein a variety of compression algorithms applicable to the data such that the compressed data can be tailored to the preferred data sizes and formats of the selected communication channel 20a.

The following is an example for data compression supported by the device 10 or the compression unit 15 respectively. The device 10 measures the network channels bandwidth to provide information to the adaptive compression module 15, which offers two core functionalities. First, the compression module 15 analyses the input data and chooses the appropriate compression method (e.g., Video Codecs, Audio Codecs, Zstd, ZIP, Kanzi). Second, the compression module 15 applies the compression on the input data and offers the data stream to the appropriate communication channel (e.g., SatCom, 4G, LAN).

The compressed data may be encrypted in an encryption unit 17 to enhance security of the transmitted data. Note that the encryption unit 17 is not essential to the embodiment and thus shown in dashed lines.

Next, the compressed data is transferred to a transmission unit 16, which is configured to transmit the compressed data via the selected communication channel 20a. The transmission unit 16 comprises an interface for each of the (commonly) available communication channels 20. In this case, the transmission unit 16 comprises a satellite interface 16a, a mobile communication interface 16b, a radio interface 16c and a Wi-Fi interface 16d. Of course, the transmission unit 16 may comprise other interfaces as well and is not limited to the shown configuration. Based on the channel selected by the channel selection unit 14, the corresponding interface of the transmission unit 16 is chosen to transmit the data. In the present example, the satellite interface 16a is chosen and the compressed data is transmitted via the satellite channel 20a. For this purpose, satellite interface 16a may be connected to a satellite antenna.

The communication device 10 described herein, including this first embodiment, provides multiple technical advantages. Through the compatibility with a plurality of communication channels, the device 10 provides reliable communication because even in a disastrous situation where certain communication channels might be disrupted, it is highly unlikely that all channels fail at the same time. This reliability is further enhanced when the device 10 is configured to regularly identify the available communication channels and to measure their bandwidth in order to switch channels if necessary. By selecting the channel with the highest transmission bandwidth, an efficient data transmission can be ensured. Moreover, the device 10 can be integrated easily into existing systems because it can be equipped with interfaces of the most common communication channels. The device 10 may offer application programming interfaces (APIs) for third party civil security system solution providers, to be capable to plug in the solution to already in place situational awareness software providers.

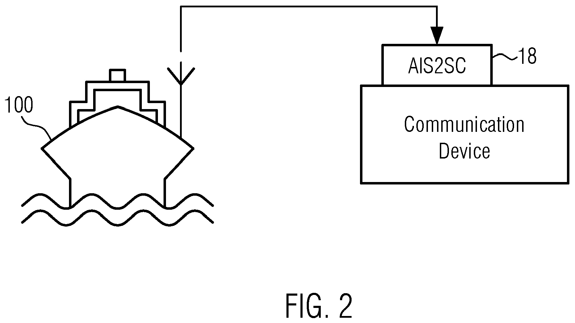

Figure 2 shows a second embodiment of a communication device 10 according to present invention. The communication device 10 itself is in large parts identical to the first embodiment and therefore neither illustrated nor explained in detail. Nonetheless, this communication device 10 further comprises an AIS-interface 18 for receiving AIS data for identification and tracking of a maritime vessel 100. The vessel 100 transmits AIS information including, for instance, information on position, direction or speed or information on identification, destination or cargo. In other words, the AIS-interface 18 establishes compatibility with the existing AIS communication standard such that the communication device 10 can be readily used in the field of maritime communication. Besides, the same technical implications and advantages as in the first embodiment apply.

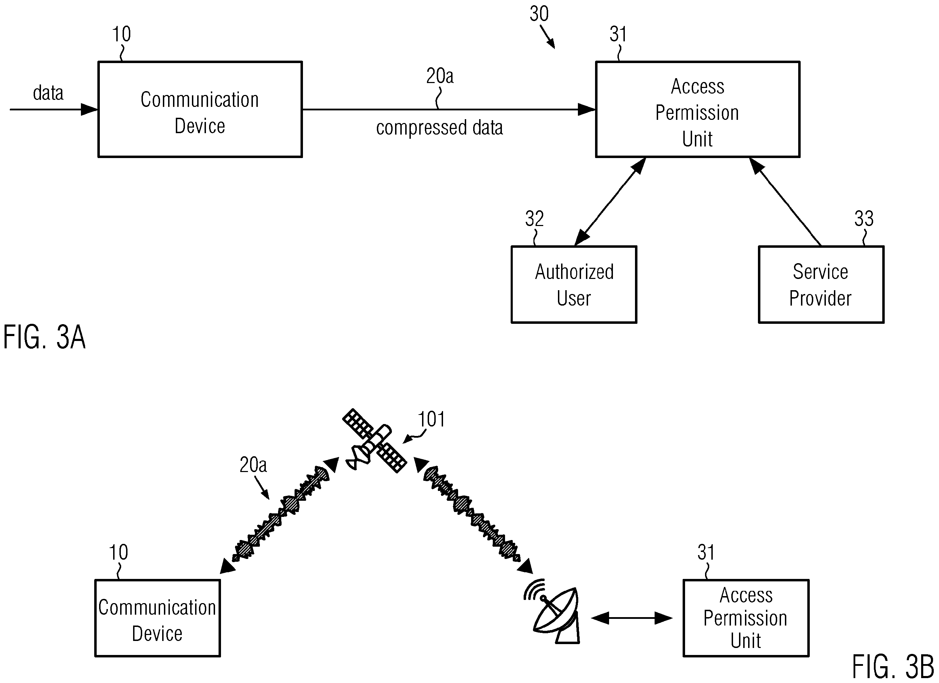

Figure 3A shows an embodiment of a communication system 30 according to an embodiment of the present invention. The communication system 30 comprises a communication device 10 of any embodiment described herein. Compressed data is transmitted via a selected communication channel X from the communication device 10 to an access permission unit 31 configured to enable bidirectional communication between the communication device 10 and an authorized entity 32. The authorized entity 32 can have legitimate interest in the data transmitted from the communication device 20a and further requires rights (authorization) to send data to the communication device 10 via the selected communication channel. The authorization of an entity against the access permission unit 31 may be carried out via login credentials or may be permitted by an organization that manages the communication system. Examples of an authorized entity 32 include governmental institutions, aid agencies, shipping companies and the like.

The authorized entity 32 can send data through the access permission unit 31 to the communication device 10 via the selected channel 20a. The communication device 10 may comprise a platform to visualize and/or analyze this data received from the authorized entity. For instance, For instance, a shipping company may contact a vessel and transmit an order to adapt the course of the vessel. This order, including the new course, can be visualized by/on the communication device 10 such that the vessel crew can act accordingly. This bidirectional data exchange is, as explained previously, reliable and efficient.

In addition, a service provider 33 may provide additional services and information to the access permission unit 31 that is transmitted to the communication device 10 via the selected channel 20a. A service provider 33 can be an iceberg detector providing information on icebergs on course of a vessel, a situational awareness service or the like. The communication between the access permission unit 31 and the service provider 33 is unidirectional, data can only be transmitted from the service provider 33 to the access permission unit 31 and further to the communication device 10. The data transmitted from the communication device 10 is not accessible to the service provider 33. In this way, the service provider 33 can enrich the communication by providing additional information, but there is no security risk an authorized user could impose when gaining access to the transmitted data.

The compressed data may further contain information on the selected communication channel 20a such that a receiver can identify the channel from the received data. This information may be added by the transmission unit or the compression unit of the communication device, for instance by tagging the data accordingly. The information on the selected communication channel 20a can be used by the authorized user 32 to prepare the data to be sent to the communication device 10 in a suitable manner so that the transmission via the selected communication channel is highly efficient (similar to the choice of compression algorithm for a given selected communication channel 20a.

Since compressed data is transmitted via the communication channel 20a and received by the access permission unit 31, means for decompressing the data on the receiving side might be beneficial. To this end, the access permission unit 31 can include a decompression unit configured to decompress the compressed data. Alternatively, the decompression unit may be provided on the side of the authorized user 32.

The communication system 30 provides a series of additional advantages that are explained in the following. Besides the technical benefits of the communication device 10 alone, the system 30 enables bidirectional streaming of data from a given site and to the given site (or between a vessel and the corresponding shipping company). Not only does this arrangement provide efficient and reliable communication and information exchange, this bidirectional information exchange may, for instance, as explained previously, improve organization and security and maritime traffic. A service provider 33 further enables the provision of additional services such as situational awareness service options or iceberg warnings and can thus further improve communication efficiency as well as security of the parties involved. Moreover, through a dedicated D(V/A)B transceiver, the data can be broadcast to a large number of receivers at the same time. This option might be relevant for news channels or in case there is a large number of parties and groups involved in the organization of a given scenario like the rescue mission after a natural disaster.

Figure 3B is a more detailed exemplary view of the communication channel 20a of Fig. 3B. Here, the selected communication channel is the satellite channel and the communication device 10 transmits data via the satellite 101 and a ground station to the access permission unit 31. This communication connection is bidirectional such that data can also be transmitted in the opposite direction from the access permission unit 31 via the satellite 101 to the communication device 10. Of course, the communication is handled in an analogous (yet adapted) manner when the selected communication channel is a different one.

Finally, two application examples of the communication device and communication system described herein are given in order to illustrate their wide applicability in maritime security and situational awareness communication.

The first application example concerns maritime security. Currently, there exist several problems in the control and safety of vessels operating around the world, including the detection and identification of vessels operating temporarily without AIS or demonstrating abnormal behavior (e.g. entering zones they are not supposed to enter) or the monitoring of sea areas where the ground-based radar coverage is not optimal. In these cases, the device and system described herein can employ the satellite communication channel in addition to established channels like radar. Further, hyperspectral satellite data can provide important additional information for the detection and identification of vessels, especially when working on a large area. Even more, compression algorithms based on artificial intelligence can be used efficiently to send hyperspectral data to a ground segment (e.g. a headquarter) for further processing and the detection of vessels can be successfully performed on the compressed data. Hence, satellite communication can provide an efficient and safe information channel for vessels across the world.

The second application example is dedicated to the situational awareness communication capacity during local blackout scenarios to guide first responder units and coordinate disaster migration efforts. This includes the rapid identification of mudflow and flood affected infrastructures during heavy rain events in alpine regions. The device and system described herein demonstrates usability and added value in case of severe mudflow/landslide events, with strong limitations of communication channels and connections, supporting the in-field communication and data gathering for a disaster management center. In detail, despite limited available bandwidth, the device may use the satellite communication channel to stream compressed video and hyperspectral satellite images from the field to the headquarter. In this manner, blackout of terrestrial communication channels (e.g. WIFI) can be bridged in disastrous situations.

## Claims

1. A communication device (10), comprising:
a receiving unit (11) configured to receive data,
a channel identification unit (12) configured to identify one or more available communication channels (20), including at least one of a geostationary orbit, GEO, satellite communication channel, a medium Earth orbit, MEO, satellite communication channel and a low Earth orbit, LEO, satellite communication channel,
a measurement unit (13) configured to measure, for each of the available communication channels (20), an available transmission bandwidth,
a channel selection unit (14) configured to select one channel (20a) among the available communication channels (20), based on the available transmission bandwidth,
a compression unit (15) configured to compress the data based on a property of the selected channel and/or the available transmission bandwidth of the selected channel, and a transmission unit (16) configured to transmit the compressed data via the selected communication channel (20a).

2. The device (10) according to claim 1, wherein the channel selection unit (14) is configured to select the channel among the available communication channels (20), which provides the highest available transmission bandwidth.

3. The device (10) according to any of the preceding claims, wherein the one or more available communication channels (20) further include mobile communication, Wi-Fi or radio communication, and
in particular, wherein the device (10) further comprises an interface (16a, 16b, 16c, 16d) for each of these available communication channels (20).

4. The device (10) according to any of the preceding claims, wherein the transmission unit (16) is configured to transmit the compressed data at a regular time interval,
in particular, wherein the time interval is adapted to the selected communication channel such that the available transmission bandwidth is not exceeded.

5. The device (10) according to any of the preceding claims, wherein the device (10) is configured in such a way that under a predetermined condition
the channel identification unit (12) identifies one or more available communication channels (20),
the measurement unit (13) measures, for each of the available communication channels (20), the available transmission bandwidth, and
the channel selection unit (14) selects a different communication channel among the one or more available communication channels (20) if the different communication channel has a higher transmission bandwidth than the previously selected communication channel (20a).

6. The device (10) according to any of the preceding claims, further comprising an encryption unit (17) configured to encrypt the compressed data, such that the transmission unit (16) transmits compressed encrypted data via the selected communication channel (20a).

7. The device (10) according to any of the preceding claims, further comprising a service brokerage unit configured to provide access data to enable data transmission via the selected communication channel (20a).

8. The device (10) according to any of the preceding claims, wherein the compression unit (15) comprises a video encoding unit configured to, using a video codec, compress the data based on a video coding format to form a video stream, and
wherein the transmission unit (16) is further configured to transmit the video stream via the selected communication channel (20a).

9. The device (10) according to any of the preceding claims, further comprising a D(V/A)B transceiver configured to broadcast the data or the compressed data.

10. The device (10) according to any of the preceding claims, wherein the receiving unit comprises an AlS-interface (18) for receiving Automatic Identification System data, AIS data, for identification and tracking of a maritime vessel (100).

11. The device (10) according to claim 10, wherein the AIS data includes identification information, position information, speed information and/or direction information of the maritime vessel.

12. The device (10) according to any claim 10 or 11, wherein the transmission unit (16) is configured to transmit the AIS data to a satellite communication service provider using any of Iridium, Inmarsat and Starlink maritime satellite communication solutions.

13. A communication system (30), comprising:
the communication device (10) according to any of the preceding claims, and
an access permission unit (31) configured to enable bidirectional communication between the communication device (10) and an authorized entity (32),
wherein the communication device (10) and the access permission unit (31) are connected through the selected communication channel (20a).

14. The system (30) according to claim 13, comprising the communication device (10) according to any of claims 10 to 12,
wherein the access permission unit (31) is configured to enable bidirectional communication between the communication device (10) and an AIS system or a very high frequency data exchange system transmitting information on vessels in the vicinity of the maritime vessel (100).

15. The system (30) according to claim 13 or 14, wherein the access permission unit (31) is further configured to provide unidirectional access to a service provider (33) such that the service provider (33) is permitted to transmit data to the communication device (10).
